# EUROPÄISCHE PATENTSCHRIFT

(11) **EP 3 683 281 B1**
(45) Veröffentlichungstag und Bekanntmachung des Hinweises auf die Patenterteilung: **22.12.2021**
(21) Anmeldenummer: 20152472.5
(22) Anmeldetag: 17.01.2020
(51) Int. Cl.: C09D 103/06

(54) **VERFAHREN ZUR BESCHICHTUNG EINES SUBSTRATES, BESCHICHTETES SUBSTRAT SOWIE VERWENDUNG EINER BESCHICHTUNG**
METHOD FOR COATING A SUBSTRATE, COATED SUBSTRATE AND USE OF A COATING
PROCÉDÉ DE REVÊTEMENT D'UN SUBSTRAT, SUBSTRAT REVÊTU AINSI QU'UTILISATION D'UN REVÊTEMENT

(30) Priorität: 18.01.2019 EP 19152554
(43) Veröffentlichungstag der Anmeldung: 22.07.2020
(73) Patentinhaber: FRAUNHOFER-GESELLSCHAFT zur Förderung der angewandten Forschung e.V., 80686 München (DE)
(72) Erfinder: Gabriel, Christina, 14476 Golm (DE); Wanner, Matthias, 14476 Golm (DE); Buller, Jens, 14476 Golm (DE); Krawczyk, Katarzyna, 14476 Golm (DE)
(74) Vertreter: Pfenning, Meinig & Partner mbB

(56) Entgegenhaltungen:
- WO-A1-2010/059562
- WO-A1-2017/060370
- KAPUSNIAK ET AL: "Thermal reactions of starch with long-chain unsaturated fatty acids. Part 2. Linoleic acid", JOURNAL OF FOOD ENGINEERING, BARKING, ESSEX, GB, Bd. 78, Nr. 1, 1. Januar 2007 (2007-01-01) , Seiten 323-332, XP005558585, ISSN: 0260-8774

## Beschreibung

Die vorliegende Erfindung betrifft ein Verfahren zur Herstellung einer gut anhaftenden biobasierten Beschichtung auf einem ausgewählten Substrat mittels einer Lösung bzw. einer Dispersion mindestens eines nicht-ionischen Stärkeesters in einem nicht-wässrigen Lösungsmittel mit spezifischen Löslichkeitsparametern. Des Weiteren wird ein beschichtetes Substrat, das mittels des erfindungsgemäßen Verfahrens hergestellt werden offenbart. Ebenso werden Verwendungsmöglichkeiten der aufgebrachten Beschichtung vorgestellt.

Als biobasierte Beschichtung, beispielsweise zum Schutz metallischer Substrate vor Korrosion, sind aus dem Stand der Technik verschiedenste Systeme bekannt.

Aus dem Stand der Technik sind beispielsweise Alkydharzsysteme als Beschichtungsmaterialien bekannt. Derartige Systeme sind allerdings mit Nachteilen behaftet:
- Bei den für die Alkydbindemittelsynthesen erforderlichen Komponenten sind lediglich die Öle/Fettsäuren biologischen Ursprungs. Sowohl die hierfür ebenfalls essentielle Dicarbonsäuren (Phthalsäure bzw. Isophthalsäure) wie auch die Polyole werden synthetisch aus fossilen Rohstoffen gewonnen. Alkydbindemittel bestehen daher zu erheblich geringerem Anteil aus nachwachsenden Rohstoffen als dass dies bei Stärkeestern der Fall ist.
- Zwar bietet der Markt neben lösemittelbasierten Alkydharzen auch umweltfreundlichere wasserdispergierbare Systeme an, diese erfordern jedoch den Zusatz von Komponenten, die bestenfalls anteilig biobasierten Ursprungs sein können (z.B. Amine, Emulgatoren). Weiterhin werden zur Beschleunigung der oxidativen Vernetzung Sikkative zugesetzt, die aufgrund ihres hohen Schwermetallanteils eine erhebliche Umweltbelastung darstellen.
- Trotz einer mittlerweile hundertjährigen Weiterentwicklung der Alkyde, weisen diese - offenbar systembedingt - grundsätzliche Beschränkungen auf. Hierzu zählen:
   ▪ Erhebliche Haftfestigkeitsschwächen auf Aluminium- und Zinkuntergründen
   ▪ Beschränkte Bewitterungsstabilität: Signifikante Neigung zu Vergilbung und Glanzverlust
   ▪ Bei Innenraumanwendung: Längeranhaltende Geruchsbelästigung.

Ebenso sind Polyurethansysteme und Epoxidharz sehr bekannt, die allerdings zumeist vollständig auf nicht nachwachsenden Rohstoffen basieren. Um den Bioanteil zu erhöhen, werden üblicherweise Öle - wie bei den Alkydharzen - eingesetzt.

Desweiteren sind Cellulose- basierte Systeme bekannt, beispielsweise Celluloseester: Acetat-, Butyrat- sowie Mischester. Auch Celluloseether und Cellulosenitrate werden als Beschichtungsmaterialien verwendet. Nachteilig hierbei ist allerdings, dass Cellulose ein relativ teurer Rohstoff ist und insbesondere Cellulosenitrate leicht zu Vergilbung neigen. Die Anwendungsfelder sind hierbei beispielsweise Nagellacke, Möbellacke und Druckfarben.

Als weitere Beschichtungsmaterialien sind Monomere bis niedermolekulare Dextrine (mit einem gewichtsgemittelten Molekulargewicht von ≤ 40.000 g/mol) als Abbauprodukte der Stärke bekannt. Für die Herstellung derartiger Systeme ist allerdings ein relativ hoher Energieaufwand notwendig. Dextrine weisen zudem eine hohe Wasserlöslichkeit auf. Desweiteren ist bekannt, dass Dextrine für Beschichtungsanwendungen geblendet oder gegrafted werden können, allerdings steigt hierbei auch der synthetische Anteil des Beschichtungssystems.

Aus dem Stand der Technik sind ebenso wässrige Stärkeester bzw. -ether-Systeme bekannt. Problematisch hierbei ist, dass der Substitutionsgrad der jeweiligen Stärkeester bzw. -ether für die Dispergierung in Wasser (bzw. auch Wasser und einem Co-Lösungsmittel) limitiert ist, so dass hinsichtlich chemisch-physikalischer Eigenschaften dieser Systeme relativ wenig Spielraum besteht. Durch die Anwesenheit von Wasser sind bei derartigen Systemen lange Durchtrocknungszeiten notwendig. Ein erhebliches Durchtrocknungshemmnis stellen auch die Colösemittel selbst dar, da diese in vielen Fällen bei Raumtemperatur einen noch deutlich niedrigeren Dampfdruck als Wasser aufweisen. Beim Einsatz von (nicht biobasierten) Vernetzern steigt erneut der Anteil an nicht-biobasierten Komponenten im System. Diese wässrigen Systeme haben zudem eine hohe Oberflächenspannung, so dass die Benetzbarkeit von Substraten, insbesondere metallischen und Kunststoffsubstraten deutlich erschwert bzw. gänzlich unmöglich ist. Grundsätzlich ist die Einstellung der Oberflächenspannung bzw. der Benetzungseigenschaften der wässrigen Systeme durch Additive nahezu unumgänglich.

Bei biobasierten Systemen im Allgemeinen ist nach wie vor sowohl der Preis als auch deren chemisch-physikalischen Eigenschaften im Vergleich zu kommerziellen synthetischen Beschichtungssystemen nicht konkurrenzfähig. Biobasierte Systeme sind zumeist hydrophil und werden normalerweise in wässrigen Medien angeboten. Hierbei kommt es jedoch zu einer starken Quellung der biobasierten Beschichtungssysteme und dadurch bedingt zu einer schlechten Anhaftung bzw. Delaminierung vom Substrat sowie geringer Wasserbeständigkeit der hergestellten Beschichtung. Sofern auf nicht wässrige Lösungsmittel zurückgegriffen wird, sind aus dem Stand der Technik Systeme in polaren Lösungsmitteln wie beispielsweise Pyridin, N,N-Dimethylformamid bzw. DMSO bekannt, die allerdings nicht anwendungsrelevante Lösungsmittel darstellen.

Im Allgemeinen sind lediglich geringe Konzentrationen des biobasierten Beschichtungsstoffes im jeweiligen Lösungsmittel zur Herstellung einer Dispersion möglich, so dass die erzielbaren Systeme keine praktische Anwendungsrelevanz besitzen.

Aufgabe der vorliegenden Erfindung ist es somit, ein biobasiertes Beschichtungssystem anzugeben, bei dessen Anwendung die vorgenannten Nachteile nicht auftreten. Insbesondere soll das Beschichtungssystem die Herstellung einer gut anhaftenden Beschichtung, die sich z. B. als Korrosionsschutzschicht eignet, insbesondere auf metallischen Substraten, ermöglichen, wobei die erzeugte Beschichtung eine hohe Feuchtigkeits- und Wasserbeständigkeit aufweist. Das Beschichtungssystem soll zudem einfach herstellbar sein.

Diese Aufgabe wird bezüglich eines Verfahrens zur Herstellung einer Beschichtung mit den Merkmalen des Patentanspruchs 1 gelöst. Die jeweiligen abhängigen Patentansprüche stellen hierbei vorteilhafte Weiterbildungen dar.

In einem ersten Aspekt betrifft die vorliegende Erfindung somit ein Verfahren zur Beschichtung eines Substrates, bei dem eine Lösung oder Dispersion, enthaltend oder bestehend aus
mindestens einem nicht-ionischen Stärkeester, gelöst bzw. dispergiert in mindestens einem nicht-wässrigen Lösungsmittel oder nicht-wässrigen Lösungsmittelgemisch mit Hansen-Löslichkeitsparametern δ_{d} von 14 bis 19, δ_{P} von 2 bis 11, δₕ von 3 bis 15 MPa^{1/2}, zumindest bereichsweise zumindest einmal auf eine Oberfläche eines Substrates, ausgewählt aus der Gruppe bestehend aus Metallsubstraten, Glassubstraten und Kunststoffsubstraten mit Ausnahme von teilweise oder vollständig fluorierten Polymeren aufgebracht und anschließend getrocknet wird.

Die mit dem erfindungsgemäßen Verfahren erzeugte Beschichtung haftet dabei auf überraschend vielen Substraten, so dass sämtliche Metalloberflächen, Glasoberflächen und viele Kunststoffoberflächen (ggf. nach Anwendung eines üblichen Vorbehandungsverfahrens, beispielsweise Kunststoffsubstrate ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen, jedoch mit Ausnahme der im Allgemeinen als abweisend wirkenden teilweise oder vollständig fluorierten Polymeren) mit dem beschriebenen Verfahren beschichtet werden können. Im Weiteren ermöglicht der nicht-ionische Charakter der Stärkeester ein Lösen oder Dispergieren desselben in nicht-wässrigen Lösungsmitteln, vor allem aber führt dies zu einer verbesserten Anhaftung sowie Wasserbeständigkeit der resultierenden Beschichtungen. Beispielsweise handelt es sich bei den nicht-wässrigen Lösungsmitteln um cyclische Furane, welche im Gegensatz zu wässrigen Systemen inklusive deren Colösemittel höhere Dampfdrücke aufweisen, was eine verbesserte Durchtrocknung der Beschichtung ermöglicht.

Eine bevorzugte Variante des erfindungsgemäßen Verfahrens ist dadurch gekennzeichnet, dass das
Metallsubstrat ausgewählt ist aus Aluminiumsubstraten, Zinksubstraten und Stahlsubstraten, und
das Kunststoffsubstrat ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen.

Insbesondere auf metallischen Substraten eignet sich das erfindungsgemäße Verfahren zur Herstellung einer Korrosionsschutzschicht, wobei die erzeugte Beschichtung eine hohe Feuchtigkeits- und Wasserbeständigkeit sowie Haftfestigkeit aufweist.

In einer bevorzugten Ausführungsform weist das mindestens eine Lösungsmittel oder das Lösungsmittelgemisch Hansen-Löslichkeitsparameter von δ_{d} von 15 bis 18,5, δₚ von 3 bis 9, δₕ von 4 bis 11 MPa^{1/2} auf.

Das ist aus der Gruppe der cyclischen Furanen, insbesondere Tetrahydrofuran; alkylierten cyclischen Furanen, insbesondere 2-Methyltetrahydrofuran; ausgewählt.

Überraschenderweise konnte festgestellt werden, dass mit dem erfindungsgemäßen Verfahren eine Beschichtung erzeugt werden kann, die gute Anhaftung an das Substrat sowie gleichzeitig eine sehr gute Wasserbeständigkeit, eine hohe Wasseraufnahmereversibilität und (auch ohne den Einsatz eines Härters) exzellente Barriereeigenschaften aufweist. Die Härte der Beschichtung ist zudem durch Wahl des Molekulargewichts und durch die Kettenlänge des Ester-Substituenten einstellbar. Bei Wahl eines kürzeren Ester-Substituenten (beispielsweise ein von Capronsäure abgeleiteter Substituent) fällt die Härte höher aus, verglichen mit längerkettigen Estersubstituenten.

Das erfindungsgemäße Beschichtungssystem basiert auf nachwachsenden und günstigen Rohstoffen, nämlich Stärke. Der in den Stärkeestern enthaltene Esteranteil, also der "fossile Kohlenstoff", kann aufgrund der Wahl eines mittleren Substitutionsgrades (beispielsweise DS: 0,5 bis 3, vorzugsweise 1 bis 2) deutlich niedriger als der Anteil fossilen Kohlenstoffs in Alkydharzen ausfallen. Zudem ist ebenso die Möglichkeit gegeben, dass die zur Veresterung eingesetzten Fettsäuren (beispielsweise Fettsäuren mit geradzahliger Anzahl von Kohlenstoffatomen) natürlich synthetisiert und somit ebenso biobasiert hergestellt werden können. Derartige Systeme zeichnen sich somit durch einen fast vollständig biologisch herstellbaren Rohstoffanteil aus.

Zudem weisen die mit dem erfindungsgemäßen Verfahren aufgebrachten Stärkeester-Beschichtungen im Gegensatz zu Alkydharzen überraschenderweise eine exzellente Haftfähigkeit insbesondere auf Metallsubstraten, insbesondere Aluminium- bzw. Zinksubstraten auf.

Die Stärkeester können bevorzugt in Tetrahydrofuran und - insbesondere vorteilhaft - in 2-Methyl-Tetrahydrofuran gelöst oder dispergiert werden und bilden nach Applikation auf metallischen und polymeren Untergründen auch ohne Additivzusätze gut haftende, homogene, physikalisch trocknende Filme.
Eine Vielzahl polymerer Werkstoffe ist gegenüber (M)THF beständig (z. B. PET, PC, PP,)
2-Methyl-Tetrahydrofuran ist gegenüber Tetrahydrofuran vorteilhaft, weil:
   o es zu hohem Anteil aus nachwachsenden Rohstoffen hergestellt werden kann
   o sein Gefährdungspotential geringer als das des Tetrahydrofurans ist.

Aufgrund des hohen Dampfdrucks der Lösemittel erfolgt eine rasche Durchtrocknung der Filme; schon nach wenigen Stunden sind diese - anders als Alkydharze - geruchsneutral.

Der Umstand, dass die Stärkeester nur in organischen Lösungsmitteln mit beschriebenen Hansen-Löslichkeitsparametern, beispielsweise und vorteilhaft in MTHF/THF löslich/dispergierbar sind, führt überraschenderweise zu einer hohen Beständigkeit der Filme gegenüber anderen organischen Lösemitteln und wässrigen Agenzien.

Durch Variation der Substituentenlänge und des Substitutionsgrades lassen sich wesentliche Eigenschaften (z. B. Härte, Elastizität, Barrierewirkung) vorhersagbar einstellen.

Die Ester-Gruppierung des erfindungsgemäßen eingesetzten Stärkeesters ist dabei insbesondere von mindestens einer linearen oder verzweigten Carbonsäure mit 5 bis 36 Kohlenstoffatomen abgeleitet, insbesondere von einer linearen Carbonsäure mit 6, 8, 10, 12, 14, 16 oder 18 Kohlenstoffatomen. Ebenso sind jedoch cyclische und/oder aromatische Carbonsäuren mit 6 bis 36 Kohlenstoffatomen verwendbar.

Unter die Stärkeester fallen somit einfache Ester (d. h. Stärkeester, die nur mit einer Art von Carbonsäure substituiert sind), aber beispielsweise auch Mischester, bei denen ein Gemisch von mindestens zwei Carbonsäuren zur Veresterung der Stärke eingesetzt wird.

Die Synthese der erfindungsgemäß eingesetzten Stärkeester kann beispielsweise durch Umsetzen der jeweiligen Stärke mit Veresterungsreagenzien, wie beispielsweise Vinyl-Carbonsäuren, Carbonsäure-Anhydriden, Carbonsäure-Chloriden oder Reaktivestern hergestellt werden.

Für die erfindungsgemäßen Zwecke können beliebige Stärkeester eingesetzt werden.

Die Stärke, die als Ausgangsmaterial für die Herstellung des Stärkeesters dieser Erfindung verwendet werden kann, kann beispielsweise aus jeder pflanzlichen Quelle stammen, einschließlich und insbesondere ausgewählt aus der Gruppe bestehend aus Maisstärke, Wachsmaisstärke, Amylomaisstärke, Weizenstärke, Kartoffelstärke, Amylopektin-Kartoffelstärke, Erbsenstärke (z. B. Palerbsenstärke, Markererbsenstärke), Tapiokastärke oder Reisstärke einschließlich aller daraus abgeleiteten Derivate.

Derivate zur Herstellung der Stärkeester können beispielsweise Dextrine aus säurekatalysierter-, thermischer oder enzymatischer Umsetzung, oxidierte Stärken hergestellt mit Natriumhypochlorit oder Wasserstoffperoxid, dünnkochende Stärken aus einer enzymatischen oder säurekatalytischen Umsetzung oder auch daraus abgeleitete Stärkeether sein.

Vorzugsweise weist der mindestens eine nicht-ionische Stärkeester eine gewichtsgemittelte molare Masse M_{w} von 20.000 bis 4·10⁷ g/mol, bevorzugt von 40.000 bis 5·10⁶, besonders bevorzugt von 1·10⁵ bis 1·10⁶ g/mol auf.

Methoden zur Bestimmung der gewichtsgemittelten molaren Masse M_{w} sind dem Fachmann bekannt und umfassen z. B. Bestimmungsmethoden mittels GPC (Gel Permeations Chromatographie) gekoppelt mit entsprechenden Detektionsverfahren wie Differentialrefraktometer und MALLS (Multi Angle Laser Light Scattering).

Die eingesetzte Lösung bzw. Dispersion weist insbesondere eine Scherviskosität von 10 bis 10⁵ mPa·s, bevorzugt von 50 bis 10⁴ mPa·s, besonders bevorzugt von 100 bis 1500 mPa·s auf.

Die Scherviskosität kann beispielsweise mit einem Rotationsrheometer (Typ: "Malvern Kinexus pro") in einem Scherratenbereich von 10-1000 s⁻¹ bestimmt werden.

Bevorzugt beträgt der Anteil des mindestens einen nicht-ionischen Stärkeesters an der Lösung oder Dispersion 5,0 bis 60 Gew.-%, bevorzugt 10 bis 50 Gew.-%, besonders bevorzugt 20 bis 45 Gew.-%.

Eine bevorzugte Variante des erfindungsgemäßen Verfahrens ist dadurch gekennzeichnet, dass die Lösung oder Dispersion frei von Härtern, insbesondere ausgewählt aus der Gruppe bestehend aus zumindest bifunktionellen organischen Isocyanaten, Epoxyderivaten, bi- und mehrfunktionale Aldehyden, anorganischen Vernetzern, Melamin- oder Benzoguanaminharzen sowie Mischungen und/oder Kombinationen hiervon ist.

Das erfindungsgemäße Verfahren beinhaltet insbesondere eine physikalische Trocknung nach Aufbringen der Lösung oder Dispersion auf das Substrat und folglich eine Abwesenheit von Vernetzern und/oder Härtern. Der technologische Fortschritt der vorliegenden Erfindung besteht darin, dass die erfindungsgemäßen Beschichtungen vergleichbare Materialeigenschaften, wie z. B. Barriereeigenschaften, wie herkömmliche Beschichtungen, die vernetzt wurden, aufweisen.

Die Lösung bzw. Dispersion kann zudem vorzugsweise Pigmente und/oder Farbstoffe enthalten. Korrosionsschutzpigmente und/oder Korrosionsschutzadditive könnten ebenso zugesetzt werden. Weiterhin wäre der Zusatz von Lichtschutzadditiven denkbar, damit (auch bei Innenraumnutzung) eine Vergilbung bei langjähriger Gebrauchsdauer möglichst vermieden wird. Weiterhin könnten auch Barrierepigmente zugesetzt werden, um die Gas- bzw.

Wasser(dampf)dichtigkeit der Beschichtung zu erhöhen.

Die Lösung oder Dispersion kann beispielsweise durch Streichen, Rakeln, Sprühen und/oder Tauchen aufgebracht werden.

Das Trocknen der Lösung und/oder Dispersion erfolgt durch Abdampfen des Lösungsmittels, ggf. unter gegenüber Normaldruck vermindertem Druck und/oder gegenüber Normaldruck erhöhten Temperaturen. Beispielsweise kann das beschichtete Substrat auf einfache Weise unter Umgebungsbedingungen getrocknet werden.

Offenbart ist zudem ein beschichtetes Substrat, umfassend ein Substrat, ausgewählt aus der Gruppe bestehend aus Metallsubstraten, Glassubstraten und Kunststoffsubstraten mit Ausnahme von teilweise oder vollständig fluorierten Polymeren, das zumindest bereichsweise eine oder mehrere Beschichtungen, enthaltend oder bestehend aus mindestens einem nicht-ionischen Stärkeester, umfasst.

Die Beschichtung zeichnet sich durch eine hohe Anhaftung am Substrat aus. Beispielsweise und bevorzugt weist die Beschichtung einen Haftfestigkeits-Kennwert, bestimmt nach DIN EN ISO 2409:2013, von 0 bis 3, weiter bevorzugt von 0 bis 2 auf.

Die Beschichtung kann eine Trockenschichtdicke von 1 µm bis 1000 µm, insbesondere von 10 µm bis 500 µm, bevorzugt 10 µm bis 300 µm, besonders bevorzugt 15 µm bis 200 µm aufweisen.

Bevorzugte Metallsubstrate sind hierbei Aluminiumsubstrate, Zinksubstrate und Stahlsubstrate.

Bevorzugte Kunststoffsubstrate sind insbesondere ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen.

Das beschichtete Substrat kann insbesondere in Form von Fahrzeugbestandteilen (insbesondere im Innenraum), Gebrauchsgegenständen und Konsumartikeln, Küchen- und Badezimmerausstattung, Gehäusen von Elektrogeräten, Fensterrahmen, Türen und Mobiliar ausgebildet sein.

Für den Fall, dass die eingesetzte Lösung/Dispersion Pigmente und/oder Farbstoffe enthält, sind diese ebenso in der daraus hergestellten Beschichtung enthalten.

Zudem ist die Verwendung einer auf einem Substrat aufgebrachten Beschichtung, enthaltend oder bestehend aus mindestens einem nicht-ionischen Stärkeester, als Korrosionsschutz, als Schutzbeschichtung gegenüber mechanischer und chemischer Einwirkung, als Barriere gegen Wasser, Elektrolytlösungen, Wasserdampf und Sauerstoff, als dekorative Beschichtung, insbesondere bei Zusatz von Pigmenten und/oder Farbstoffen als dekorative oder sonstig funktionelle Beschichtung offenbart.

Anhand der nachfolgenden Beispiele soll die Erfindung näher erläutert werden, jedoch ohne dieselbe auf die Beispiele zu beschränken.

### Dabei zeigen

- Tabelle 1: Scherviskositäten von verschiedenen Stärkeestern bei Scherraten von 100 s⁻¹.
- Tabelle 2: Gitterschnittergebnisse nach ISO 2409 von verschiedenen Stärkeestern.
- Tabelle 3:: Einige Martenshärte-relevante Daten vor und nach Einwirkung einer 360-stündigen Kondenswassertestbeanspruchung (KDWB).
- Figur 1: Scherviskositäten von Stärkeester-Dispersionen mit Methyl-THF.
- Figur 2: Wasseraufnahmereversibilität von Stärkeoctanoat-4C, Stärkeoctanoat-4F und Stärkedecanoat-4F.
- Figur 3: EIS-Daten von Stärkeoctanoat-4C (0h und 8 h), Stärkeoctanoat-4F und Stärkedecanoat-4F.
- Figur 4: EIS-Daten von zwei kommerziellen Klarlacken (Trockenschichtdicke: 40 µm); KL 1: ProGloss 10 (BASF), KL 2: CeramiClear (PPG).
- Figur 5: EIS-Daten von einem kommerziellen Primer (Trockenschichtdicke: 45 µm); 2K-EP-Grund ZG-02 (ReiColor).

### Beispiel 1: Abbau von Stärke

Für den Abbau einer hochamylosigen Maisstärke wurde eine α-Amylase mit 1 U/g Stärke eingesetzt.

Vor dem Abbau wurde die 10%ige Stärke-Lösung zunächst für 80 min bei 120 °C und 150 °C aufgeschlossen, um anschließend den Abbau für 30 min bei 80 °C durchzuführen. Final wurde die abgebaute Stärke in Ethanol gefällt und unter Vakuum bei 50 °C für 20 h getrocknet. Die gewichtsmittlere Molmasse M_{w} wurde mittels GPC-MALS (Laufmittel: DMSO) ermittelt und betrug 2,0·10⁵ g/mol.

### Beispiel 2: Synthese von Stärkeestern

A: Für die Synthese von einem Stärkelaurat wurde eine native Palerbsenstärke eingesetzt. Die Stärke (10 Gew.-%) wurde für 1 h bei 95 °C in DMSO destrukturiert. Für die Umesterung wurden 2 mol/mol AGU Vinyllaurat bei 110 °C für 2,5 h unter Zusatz von 0,3 mol/mol AGU Cs₂CO₃ umgesetzt. Das Produkt wurde mit einem Ethanol-Wassergemisch gefällt, in THF gelöst und danach wieder mit einem Ethanol-Wassergemisch gefällt. Die Trocknung fand analog zu Beispiel 1 statt. Der erhaltene Substitutionsgrad (DS) betrug 1,63 und wurde mittels Elementaranalyse über den Kohlenstoff-, Wasserstoff und Sauerstoffanteil der Probe bestimmt.
B: Für die Synthese von einem Stärkeoctanoat wurde die abgebaute hochamylosige Maisstärke aus Beispiel 1 und Vinyloctanoat verwendet. Die Reagenzmenge und die Reaktionsbedingungen waren analog zu Beispiel 2A, wobei die Stärkekonzentration 35 % war. Der ermittelte DS betrug 1,47.
C: Für die Synthese von einem Stärkehexanoat wurde eine industriell oxidativ abgebaute Kartoffelstärke (M_{w}: 1,2·10⁵ g/mol) eingesetzt. Diese wurde analog zu Beispiel 2B mit Vinylhexanoat verestert. Der DS-Wert betrug 1,93.
D: Für die Synthese von einem Stärkedecanoat und einem weiteren Octanoat wurde eine native hochamylosige Maisstärke eingesetzt. Die Synthese wurde wie in Beispiel 2A durchgeführt. Die Reagenzmenge des jeweiligen Vinylsäureesters lag bei 1,5 mol/mol AGU. Der DS des Decanoats lag bei 1,43 und beim Octanoat bei 1,33.

### Beispiel 3: Herstellung von Stärkeester-Dispersionen

Die folgenden Dispersionen wurden alle bei Raumtemperatur hergestellt.
A: Es wurde eine 7%ige Stärke-Dispersion in Methyl-THF (Hansen-Löslichkeitsparameter: δ_{d}:16,9, δ_{P}: 5, δₕ: 4,3) auf Basis des Stärkelaurats aus Beispiel 2A mittels eines mechanischen Rührers oder eines Mini-Speedmixers hergestellt.
B: Unter Anwendung eines Mini-Speedmixers wurde eine 14%ige und mittels eines mechanischen Rührers eine 40%ige Stärkeoctanoat (2B)-Dispersion in Methyl-THF hergestellt.
C: Das Stärkehexanoat aus Beispiel 2C führte unter Anwendung eines mechanischen Rührers zu einer 30%igen Dispersion in Methyl-THF.
D: Ein Stärkehexanoat (DS 1,67; Synthese analog Beispiel 2) einer hochamylosigen Maisstärke wurde mittels eines mechanischen Rührers zu einer 10%igen Dispersion in THF ((Hansen-Löslichkeitsparameter: δ_{d}:16,8, δₚ: 5,7, δₕ: 8,0) verarbeitet. Zusätzlich wurde als Farbstoff Methylenblau hinzugesetzt.
E: Die beiden Stärkeester aus Beispiel 2D wurden mittels eines Mini-Speedmixers zu 11%igen Dispersionen in Methyl-THF verarbeitet.

### Scherviskosität:

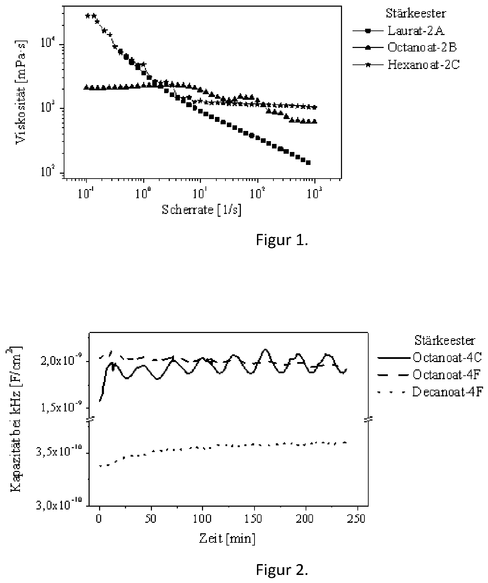

Die Scherviskosität der zuvor beschriebenen Dispersionen (Beispiel 3) wurde mit einem Rotationsrheometer ermittelt. Beispiele sind in Tabelle 1 und Figur 1 dargestellt.

### Beispiel 4: Herstellung einer Stärkeester-Beschichtung

A: Die in Beispiel 3A hergestellte Dispersion wurde auf eine Glasplatte gegossen und mit einem Rakel mit einem Spalt von 100 µm ausgestrichen.
B: Die Stärkeester-Dispersion aus Beispiel 3A wurde auf ein Aluminium-Substrat gegossen und mit einem Rakel mit einem Spalt von 400 µm ausgestrichen.
C: Die Stärkeoctanoat-Dispersion von Beispiel 3B (c: 14 %) wurde auf verzinkten Stahl, ein Polycarbonat- und ein Polyoxymethylen-Substrat gegossen und mit einem Rakel mit einem Spalt von 400 µm ausgestrichen.
D: Das Stärkehexanoat aus Beispiel 3C wurde auf eine Glasplatte gegossen und mit einem Rakel mit einem Spalt von 100 µm ausgestrichen.
E: Die Dispersion aus 3D wurde mittels eines Pinsels auf ein Aluminiumsubstrat aufgetragen.
F: Die Stärkeester-Dispersionen aus Beispiel 3E wurden mit einem Rakel und einem Spaltmaß von 400 µm auf Aluminium-, Polycarbonat- und Polyoxymethylen-Substrate aufgetragen.

Alle beschriebenen Beschichtungen trockneten physikalisch bei Raumtemperatur.

### Haftfestigkeit:

Die Haftfestigkeit wurde mittels eines Gitterschnitttests nach ISO 2409 getestet und nach vorgegebenen Abbildungen visuell in die ISO-Kennwerte zwischen 0-5 eingeordnet, wobei Kennwert 0 bedeutet, dass das Einbringen orthogonaler Schnitte zu keinerlei Ablösungsphänomenen zwischen Beschichtung und Substrat geführt hat. Beschichtete Aluminiumsubstrate wurden zusätzlich für 360 h einer Kondenswassertestbeanspruchung (KDWB) gemäß ISO 6270-1 ausgesetzt und die Gitterschnitt-Kennwerte danach erneut bestimmt. Die Ergebnisse in Tabelle 2 zeigen, dass die meisten Stärkeester sowohl auf Glas, Metallen, als auch Kunststoffsubstraten hervorragende Haftfestigkeiten besitzen und diese sich nur geringfügig nach KDWB ändert.

### Martens-Härte:

Die Martens-Härte wurde gemäß DIN EN ISO 14577 nach Trocken-Lagerung und nach 360 h Kondenswasser-Einwirkung bestimmt. Die Ergebnisse am Beispiel von zwei Stärkeestern ist in Tabelle 3 zusammengestellt.

### Wasseraufnahmereversibilität:

Bei dem Wasseraufnahmereversibilitätstest wurden die Proben einer vierstündigen hydrothermischen Zyklisierung (Periodendauer: 30 min; sinusförmige Zyklisierung zwischen 10 °C und 40 °C unter Einwirkung von 0,025 M KNO₃-Lösung) ausgesetzt. Die Ergebnisse sind in Figur 2 am Beispiel von Stärkeoctanoat-4C, Stärkeoctanoat-4F und Stärkedecanoat-4F (Trockenschichtdicken: ≈ 30 µm) dargestellt.

Es ist kein wesentlicher Kapazitätszuwachs aufgetreten. Dies bedeutet, dass die Systeme trotz der thermozyklischen Einwirkung der Leitelektrolytlösung nur unwesentliche Mengen an Wasser aufnehmen. Der Umstand, dass die Kapazitätsamplituden bei fortschreitender Thermozyklisierung keine Zuwächse erleiden, lässt auf einen hohen Erhalt dieser "Elastiziät" rückschließen.

### Elektrochemische Impedanzspektroskopie:

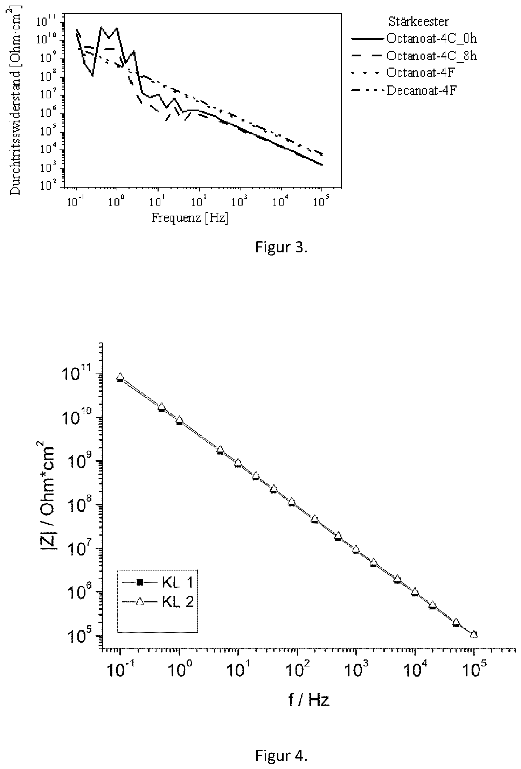

Die Elektrochemische Impedanzspektroskopie (EIS) gibt Auskunft über die Barrierewirkung der ausgehärteten Filme. Nach 20-minütiger Einwirkung einer Harrison-Lösung wurden die Proben Stärkeoctanoat-4C, Stärkeoctanoat-4F und Stärkedecanoat-4F (Trockenschichtdicken: ≈ 30 µm) vermessen. Das Octanoat-4C wurde zusätzlich auch nach 8 h untersucht. Die Ergebnisse sind in Figur 3 dargestellt, die zeigen, dass die Ester-Beschichtungen eine sehr gute Barrierewirkung bzw. hohen Barriereerhalt aufweisen.

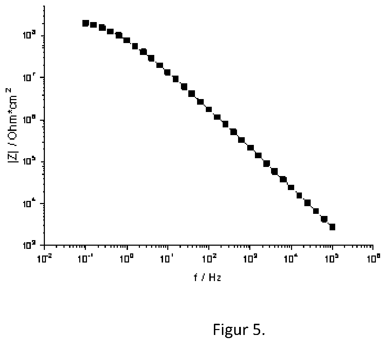

Da es sich bei EIS-Messungen, die in unseren Beispielen aufgeführt sind, nicht um eine analytische Standardmethode handelt, die in älteren Patenten gefunden wird, sind zur Verdeutlichung des technologischen Fortschritts bzgl. der vernetzungsfreien Lösung unseres Patents untenstehend 3 kommerzielle Beispiele mit Vernetzung aufgeführt (siehe Figur 4 und Figur 5). Der Vergleich zu den erfindungsgemäßen Beschichtungen zeigt, dass vergleichbare Barriereeigenschaften bei gleichen Messbedingungen erhalten werden und das ohne Vernetzung bzw. die vernetzen kommerziellen Systeme keine besseren Eigenschaften aufweisen.

**Tabelle 1.**

| Probe | Feststoffkonzentration [%] | Scherviskosität bei 100 s⁻¹ |
|---|---|---|
| Stärkelaurat-2A | 7 | 341 |
| Stärkeoctanoat-2B | 40 | 1318 |
| Stärkehexanoat-2C | 30 | 1148 |

**Tabelle 2.**

| Probe | Substrat | ISO-Kennwert bei RT | ISO-Kennwert nach 360 h KDWB |
|---|---|---|---|
| Stärkelaurat-4A | Glas | 2 | - |
| Stärkehexanoat-4D | Glas | 0 | - |
| Stärkelaurat-4A | Aluminium | 0 | 1-2 |
| Stä rkeocta noat -4F | Aluminium | 0 | 0 |
| Stä rkedeca noat -4F | Aluminium | 0 | 1 |
| Stä rkeocta noat -4C | Verzinkter Stahl | 1 | - |
| Stä rkeocta noat -4C | Polycarbonat | 0 | - |
| Stä rkeocta noat -4F | Polycarbonat | 0 | - |
| Stä rkedeca noat -4F | Polycarbonat | 0 | - |
| Stä rkeocta noat -4C | Polyoxymethylen | 0 | - |
| Stä rkeocta noat -4F | Polyoxymethylen | 0 | - |
| Stä rkedeca noat -4F | Polyoxymethylen | 0 | - |

**Tabelle 3.**

| Probe | HM(h) 4.000µm N/mm² vor KDWB | nplast % vor KDWB | HM(h) 4.000µm N/mm² nach KDWB | nplast % nach KDWB |
|---|---|---|---|---|
| Stä rkeocta noat -4F | 46,89 | 83,53 | 36,68 | 77,22 |
| Stä rkedeca noat-4F | 19,47 | 52,71 | 18,22 | 52,61 |

## Patentansprüche

1. Verfahren zur Beschichtung eines Substrates, bei dem eine Lösung oder Dispersion, enthaltend oder bestehend aus mindestens einem nicht-ionischen Stärkeester, gelöst bzw. dispergiert in
mindestens eine Lösungsmittel ausgewählt aus der Gruppe der cyclischen Furane zumindest bereichsweise zumindest einmal auf eine Oberfläche eines Substrates, ausgewählt aus der Gruppe bestehend aus Metallsubstraten, Glassubstraten und Kunststoffsubstraten mit Ausnahme von teilweise oder vollständig fluorierten Polymeren aufgebracht und anschließend getrocknet wird.

2. Verfahren nach Anspruch 1, **dadurch gekennzeichnet, dass** das Metallsubstrat ausgewählt ist aus Aluminiumsubstraten, Zinksubstraten und Stahlsubstraten, und
das Kunststoffsubstrat ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen.

3. Lösung oder Dispersion nach einem der vorhergehenden Ansprüche, **dadurch gekennzeichnet, dass** das mindestens eine Lösungsmittel ausgewählt ist aus Tetrahydrofuran; alkylierten cyclischen Furanen, insbesondere 2-Methyltetrahydrofuran und/oder Mischungen hiervon.

4. Verfahren nach einem der vorhergehenden Ansprüche, **dadurch gekennzeichnet, dass** der mindestens eine nicht-ionische Stärkeester einen Substitutionsgrad (DS) von 0,5 bis 3,0, bevorzugt von 1,0 bis 2,0 aufweist.

5. Verfahren nach einem der vorhergehenden Ansprüche, **dadurch gekennzeichnet, dass** die Estergruppierung von mindestens einer linearen oder verzweigten Carbonsäure mit 5 bis 36 Kohlenstoffatomen abgeleitet ist, insbesondere von einer linearen Carbonsäure mit 6, 8, 10, 12, 14, 16 oder 18 Kohlenstoffatomen.

6. Verfahren nach einem der vorhergehenden Ansprüche, **dadurch gekennzeichnet, dass** der mindestens eine nicht-ionische Stärkeester eine gewichtsgemittelte molare Masse M_{w} von 20.000 bis 4·10⁷ g/mol, bevorzugt von 40.000 bis 5·10⁶, besonders bevorzugt von 1·10⁵ bis 1·10⁶ g/mol aufweist.

7. Verfahren nach einem der vorhergehenden Ansprüche, **dadurch gekennzeichnet, dass** die Lösung oder Dispersion eine Scherviskosität von 10 bis 10⁵ mPa·s, bevorzugt von 50 bis 10⁴ mPa·s, besonders bevorzugt von 100 bis 1500 mPa·s aufweist.

8. Verfahren nach einem der vorhergehenden Ansprüche, **dadurch gekennzeichnet, dass** der Anteil des mindestens einen nicht-ionischen Stärkeesters an der Lösung oder Dispersion 5,0 bis 60 Gew.-%, bevorzugt 10 bis 50 Gew.-%, besonders bevorzugt 20 bis 45 Gew.-% beträgt.

9. Verfahren nach einem der vorhergehenden Ansprüche, **dadurch gekennzeichnet, dass** die Lösung oder Dispersion frei von Härtern, insbesondere ausgewählt aus der Gruppe bestehend aus zumindest bifunktionellen organischen Isocyanaten, Epoxyderivaten, bi- und mehrfunktionale Aldehyden, anorganischen Vernetzern, Melamin- oder Benzoguanaminharzen sowie Mischungen und/oder Kombinationen hiervon, ist.

10. Verfahren nach einem der vorhergehenden Ansprüche, **dadurch gekennzeichnet, dass** während des Trocknens keine Vernetzungen der nicht-ionischen Stärkeester, insbesondere durch etwaige der Lösung oder Dispersion zugesetzte und als Vernetzer- und/oder Härter fungierende Reagenzien, erfolgt.

## Claims

1. Method for coating a substrate, in which a solution or dispersion, containing or consisting of
at least one non-ionic starch ester, dissolved or dispersed in
at least one solvent selected from the group of cyclic furans, is applied at least in regions and at least once to a surface of a substrate selected from the group consisting of metal substrates, glass substrates and plastics substrates, with the exception of partially or completely fluorinated polymers, and is then dried.

2. Method according to claim 1, **characterised in that**
the metal substrate is selected from aluminium substrates, zinc substrates and steel substrates, and
the plastics substrate is selected from the group consisting of polyalkylenes, e.g. polyethylene or polypropylene; polycarbonates; polyesters, e.g. polyethylene terephthalate; polyamides; polystyrenes and polyurethanes.

3. Solution or dispersion according to any of the preceding claims, **characterised in that** the at least one solvent is selected from tetrahydrofuran; alkylated cyclic furans, in particular 2-methyltetrahydrofuran and/or mixtures thereof.

4. Method according to any of the preceding claims, **characterised in that** the at least one non-ionic starch ester has a degree of substitution (DS) of from 0.5 to 3.0, preferably of from 1.0 to 2.0.

5. Method according to any of the preceding claims, **characterised in that** the ester grouping is derived from at least one linear or branched carboxylic acid having 5 to 36 carbon atoms, in particular from a linear carboxylic acid having 6, 8, 10, 12, 14, 16 or 18 carbon atoms.

6. Method according to any of the preceding claims, **characterised in that** the at least one non-ionic starch ester has a weight average molecular weight M_{w} of from 20,000 to 4·10⁷ g/mol, preferably of from 40,000 to 5·10⁶, particularly preferably of from 1·10⁵ to 1·10⁶ g/mol.

7. Method according to any of the preceding claims, **characterised in that** the solution or dispersion has a shear viscosity of from 10 to 10⁵ mPa·s, preferably of from 50 to 10⁴ mPa·s, particularly preferably of from 100 to 1500 mPa·s.

8. Method according to any of the preceding claims, **characterised in that** the proportion of the at least one non-ionic starch ester in the solution or dispersion is 5.0 to 60 wt.%, preferably 10 to 50 wt.%, particularly preferably 20 to 45 wt.%.

9. Method according to any of the preceding claims, **characterised in that** the solution or dispersion is free of curing agents, in particular selected from the group consisting of at least bifunctional organic isocyanates, epoxy derivatives, bifunctional and multifunctional aldehydes, inorganic crosslinkers, melamine or benzoguanamine resins and mixtures and/or combinations thereof.

10. Method according to any of the preceding claims, **characterised in that** the non-ionic starch esters are not crosslinked during the drying, in particular by potential reagents that are added to the solution or dispersion and function as crosslinkers and/or curing agents.

## Revendications

1. Procédé pour le revêtement d'un substrat, selon lequel une solution ou dispersion, contenant ou constituée
d'au moins un ester d'amidon non ionique, dissout ou dispersé dans
au moins un solvant choisi dans le groupe des furanes cycliques est appliquée au moins par endroits au moins une fois sur une surface d'un substrat, choisi dans le groupe constitué de substrats métalliques, substrats vitreux et substrats plastiques à l'exception de polymères partiellement ou entièrement fluorés et ensuite séchée.

2. Procédé selon la revendication 1, **caractérisé en ce que**
le substrat métallique est choisi parmi des substrats en aluminium, substrats en zinc et substrats en acier, et
le substrat plastique est choisi dans le groupe constitué des polyalkylènes, par exemple polyéthylène ou polypropylène ; polycarbonates ; polyesters, par exemple polyéthylène téréphthalate ; polyamides ; polystyrènes ainsi que polyuréthanes.

3. Solution ou dispersion selon l'une quelconque des revendications précédentes, **caractérisée en ce que** le au moins un solvant est choisi parmi le tétrahydrofurane ; les furanes cycliques alkylés, en particulier le 2-méthyltétrahydrofurane et/ou des mélanges de ceux-ci.

4. Procédé selon l'une quelconque des revendications précédentes, **caractérisé en ce que** le au moins un ester d'amidon non ionique présente un degré de substitution (DS) de 0,5 à 3,0, de préférence de 1,0 à 2,0.

5. Procédé selon l'une quelconque des revendications précédentes, **caractérisé en ce que** le groupement ester est dérivé d'au moins un acide carboxylique linéaire ou ramifié avec 5 à 36 atomes de carbone, en particulier d'un acide carboxylique linéaire avec 6, 8, 10, 12, 14, 16 ou 18 atomes de carbone.

6. Procédé selon l'une quelconque des revendications précédentes, **caractérisé en ce que** le au moins un ester d'amidon non ionique présente une masse molaire moyenne en poids M_{w} de 20 000 à 4·10⁷ g/mol, de préférence de 40 000 à 5·10⁶, de manière particulièrement préférée de 1·10⁵ à 1·10⁶ g/mol.

7. Procédé selon l'une quelconque des revendications précédentes, **caractérisé en ce que** la solution ou dispersion présente une viscosité de cisaillement de 10 à 10⁵ mPa·s, de préférence de 50 à 10⁴ mPa·s, de manière particulièrement préférée de 100 à 1500 mPa·s.

8. Procédé selon l'une quelconque des revendications précédentes, **caractérisé en ce que** le pourcentage du au moins un ester d'amidon non ionique sur la solution ou dispersion atteint 5,0 à 60 % en poids, de préférence 10 à 50 % en poids, de manière particulièrement préférée 20 à 45 % en poids.

9. Procédé selon l'une quelconque des revendications précédentes, **caractérisé en ce que** la solution ou dispersion est exempte de durcisseurs, en particulier choisis dans le groupe constitué d'au moins les isocyanates organiques bifonctionnels, dérivés époxydiques, aldéhydes bi- et multifonctionnels, agents de réticulation anorganiques, résines mélaminiques ou de benzoguanamine ainsi que des mélanges et/ou combinaisons de ceux-ci.

10. Procédé selon l'une quelconque des revendications précédentes, **caractérisé en ce que** pendant le séchage aucune réticulation des esters d'amidon non ioniques, en particulier par d'éventuels réactifs ajoutés à la solution ou dispersion et fonctionnant comme agents de réticulation et/ou durcisseurs ne s'effectue.
